# EUROPÄISCHE PATENTSCHRIFT

(11) **EP 0 899 165 B1**
(45) Veröffentlichungstag und Bekanntmachung des Hinweises auf die Patenterteilung: **25.06.2003**
(21) Anmeldenummer: 98113989.2
(22) Anmeldetag: 27.07.1998
(51) Int. Cl.: B60R 19/48, B60R 3/00

(54) **Frontlenker-Lastkraftwagen mit verschmutzungsarmen Einstiegen**
Cab-over-engine lorries with footsteps protected against dirt
Camions à cabine avancée avec marchepieds protégés contre les salissures

(30) Priorität: 01.09.1997 AT 145797
(43) Veröffentlichungstag der Anmeldung: 03.03.1999
(73) Patentinhaber: MAN Steyr AG, 4400 Steyr (AT)
(72) Erfinder: Hausleitner, Dietmar, Ing., 4400 Steyr (AT)

(56) Entgegenhaltungen:
- EP-A- 0 175 655
- EP-A- 0 282 590
- DE-A- 3 934 807
- FR-A- 2 258 288

## Beschreibung

Die Erfindung betrifft einen Frontlenker-Lastkraftwagen mit einem Fahrerhaus und einem über Eck gehenden, sich zum jeweiligen Einstiegskasten hin erstreckenden Stoßfänger.

Der Erfindung liegt das Problem zugrunde, daß die beiden Einstiegskästen moderner Frontienker-Lastkraftwagen, die jeweils vom und hinten sowie innen durch eine Wand begrenzt sind und wenigstens eine in der Regel gelochte oder geriffelte Trittplatte aufweisen, während der Fahrt insbesondere bei hohen Geschwindigkeiten stark verschmutzen. Es wurde schon versucht, dieses Problem dadurch zu beseitigen, daß man die Einstiege während der Fahrt abgedeckt hat. Die DE 38 26 542 A1 schlägt hierzu vor, die Trittbretter des Einstieges an der Innenseite einer um eine vertikale Achse schwenkbaren Einstiegabdeckplatte anzuordnen, mit der sie aus einer während der Fahrt verdeckten in eine für den Aufstieg einer Person frei zugängliche Position und zurück bringbar sind. Diese Lösung erweist sich jedoch als vergleichsweise kompliziert darstellbar und damit teuer. Andrerseits ist es schon bekannt - wie aus Fig. 1 der DE 40 14 577 C1 ersichtlich - am Fahrerhaus von Lastkraftwagen, dort am jeweiligen Eckübergangsbereich von der Frontwand zu einer Seitenwand eine Eckblende vorzusehen, die nach Art einer Düse ausgebildet ist und bei Fahrt eine ein Verschmutzen der Seitenwand mit Einstiegstür und Seitenfenster verhindemde Luftströmung erzeugen soll. Ein Verschmutzen der Einstiege jedoch kann durch das Vorsehen solcher Eckblenden schon wegen ihrer Höhenlage am Fahrerhaus nicht verhindert werden.

Ein Frontlenker-Lastkraftwagen gemäß dem Oberbegriff des Anspruchs 1 ist aus FR 2 258 288 A bekannt.

Es ist daher Aufgabe der Erfindung, für Lastkraftwagen der gattungsgemäßen Art Möglichkeiten zu schaffen, mit denen eine Verschmutzung der Einstiegskästen während der Fahrt weitgehend verhindert werden kann.

Diese Aufgabe ist erfindungsgemäß durch die im Kennzeichen des Anspruches 1 angegebenen Merkmale gelöst.

Durch das erfindungsgemäße Vorsehen solcher Düsenkanäle kann insbesondere bei hohen Fahrgeschwindigkeiten einer Verschmutzung der Einstiege wirksam vorgebeugt werden, aufgrund der Luftströmung, die in den Düsenkanälen erzeugt wird und nach Verlassen derselben in den Einstiegkästen, quasi wie ein Schutzschild wirkend, das Eindringen von Schmutz verhindert. Insbesondere bei Femverkehrslastkraftwagen, die meist auf Autobahnen oder gut ausgebauten Landstraßen mit relativ hoher Fahrgeschwindigkeit bewegt werden, wirkt sich somit die erfindungsgemäße Lösung positiv aus.

Vorteilhafte Einzelheiten und Ausgestaltungen der Erfindung sind in den Unteransprüchen gekennzeichnet Vorzugsweise zweigt jeder Düsenkanal nahe des Eckbereiches von der Stoßfänger-Vorderwand ab, führt in gekrümmter Form zum benachbarten Einstiegkasten hin und mündet in diesen über eine Durchtrittsöffnung in dessen Vorderwand aus. Außerdem kann jeder Düsenkanal einkanalig ausgebildet oder intern z.B. durch eine vertikale und/oder horizontale Wand in mehrere Teilkanäle unterteilt sein, wobei jede solche Wand gleichzeitig auch als Formversteifungselement dient und gegebenenfalls eine dünnere Düsenkanalaußenwand erlaubt. Zweckmäßig kann es auch sein, lufteintrittsseitig am bzw. im Düsenkanal ein Schmutzfanggitter geeigneter Ausbildung vorzusehen, um das direkte Vordringen von Schmutzpartikeln oder Steinchen von vome in den Düsenkanal zu verhindern. Da bei Lastkraftwagen in der Regel Stoßfänger verwendet werden, die für die Ausrüstung mit zwei oder vier Zusatzscheinwerfem (zwei Nebelscheinwerfer und zwei Femstrahler) vorbereitet aber nicht immer mit diesen bestückt sind, besteht die Möglichkeit, jeweils zwei - entweder die beiden inneren oder die beiden äußeren - der vier für den Einbau solcher Zusatzscheinwerfer vorgesehenen Öffnungen im Stoßfänger zweckzuentfremden und an diesen je einen erfindungsgemäßen Düsenkanal abgehend anzuschließen. Es ist aber auch möglich, den Eintrittsquerschnitt des Düsenkanals so groß festzulegen, daß in den Eingangsbereich des Düsenkanals ein Zusatzscheinwerfer eingebaut werden kann, neben oder um den ein entsprechender Luftdurchtrittsquerschnitt verbleibt. Dabei kann der Zusatzscheinwerfer außen von einem ringförmigen Schmutzfanggitter umgeben und über dieses im Eingangsbereich des Düsenkanales eingebaut gehalten sein.

Nachfolgend ist die erfindungsgemäße Lösung anhand der Zeichnung noch näher erläutert. In der Zeichnung zeigt Fig. 1 perspektivisch einen Frontlenker-Lastkraftwagen ausschnittsweise von vorn, Fig. 2 perspektivisch den Einstiegsbereich eines Frontlenker-Lastkraftwagen von schräg hinten, Fig. 3 und 4 je eine Schemazeichnung durch eine Ausführungsform eines erfindungsgemäßen Düsenkanals sowie Fig. 5 bis 10 je eine Ausführungsform des erfindungsgemäßen Düsenkanals in Einbaulage am in Ansicht von vorne dargestellten Stoßfänger.

Von einem Frontlenker-Lastkraftwagen sind in der Zeichnung nur jene Bereiche unterhalb des Fahrerhauses dargestellt, die für das Verständnis der Erfindung wesentlich sind. Hierzu gehört ein Stoßfänger 1, der im dargestellen Fall aus einem oberen Teil 1/1 und unteren Teil 1/2 besteht. Der obere Stoßfänger - Teil 1/1 nimmt unter anderem zwei Scheinwerfer 2 und zwei Blinkleuchten 3 in entsprechenden Einbauöffnungen auf. Der untere Stoßfänger-Teil 1/2 weist üblicherweise verschiedene Durchbrüche und Einbauöffnungen für den entweder serienmäßigen oder auf Kundensonderwunsch erfolgenden Einbau von Zusatzscheinwerfem auf, wobei es sich um je Fahrzeugseite einen Nebelscheinwerfer 4 und/oder Weitstrahler 5 handeln kann. Der Stoßfänger 1 geht unterhalb des Fahrerhauses über Eck und erstreckt sich längs der jeweiligen Fahrzeugseite bis zum dort gegebenen Einstiegskasten 6 hin. Dieser ist vorne durch eine Vorderwand 7, hinten durch eine Rückwand 8, die auch durch ein Kotflügelteil für das zugehörige Vorderrad 9 gebildet sein kann, und innen durch eine Innenwand 10 begrenzt und enthält außerdem eine untere Trittplatte 11 sowie wenigstens eine weitere obere Trittplatte 12.

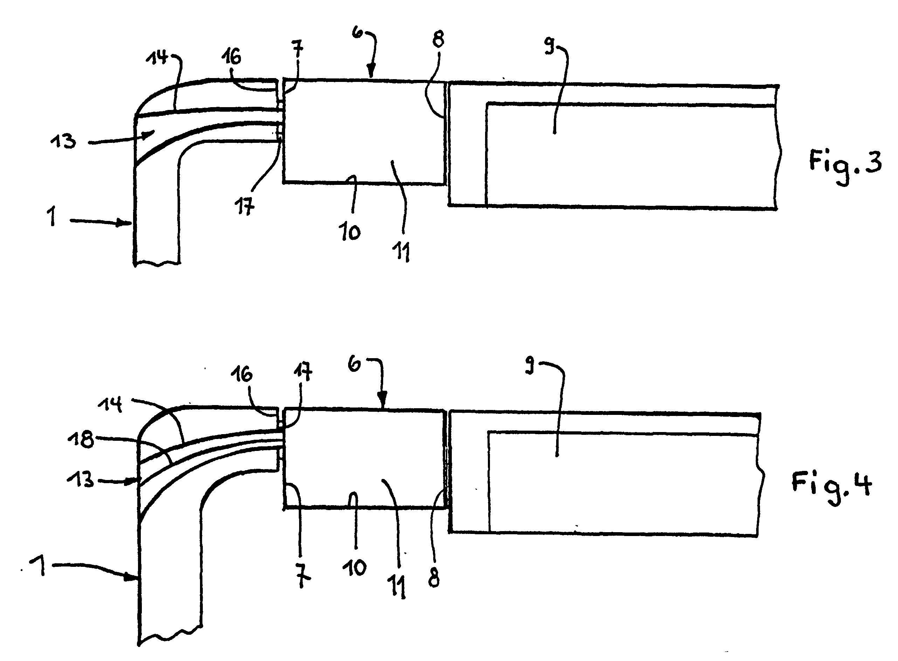

Erfindungsgemäß ist ein Düsenkanal 13 vorgesehen, der die Vorderseite des Stoßfängers 1 mit der Vorderwand 7 eines Einstiegkastens 6 verbindet, sich von seiner stoßfängervorderseitigen Eintrittquerschnittsfläche ausgehend auf eine dieser gegenüber wesentlich kleinere einstiegsseitige Austrittsquerschnittsfläche verjüngt und einen solchen Verlauf seiner Kanalbegrenzungswand 14 - siehe Fig. 3 und 4 - aufweist, daß während der Fahrt durchströmende Luft beschleunigbar und eine gezielt gerichtete, nach Verlassen des Düsenkanals 13 im Einstiegkasten 6 das Eindringen von Schmutz verhindernde Luftströmung erzeugbar ist. Diese Luftströmung wirkt sich innerhalb eines Einstiegkastens 6 wie ein Schutzvorhang oder Schutzpolster aus, an dem auftreffende Regentropfen, Sprühnebel, Spritzwasser, Schneematsch und dergleichen Schmutzpartikel abgewiesen werden.

Für die konkrete Ausgestaltung und Anordnung eines solchen erfindungsgemäßen Düsenkanals 13 gibt es die verschiedensten Möglichkeiten. Einige davon sind in den verschiedenen Figuren der Zeichnung beispielhaft dargestellt, ohne jedoch die Erfindung auf diese Beispiele beschränken zu wollen.

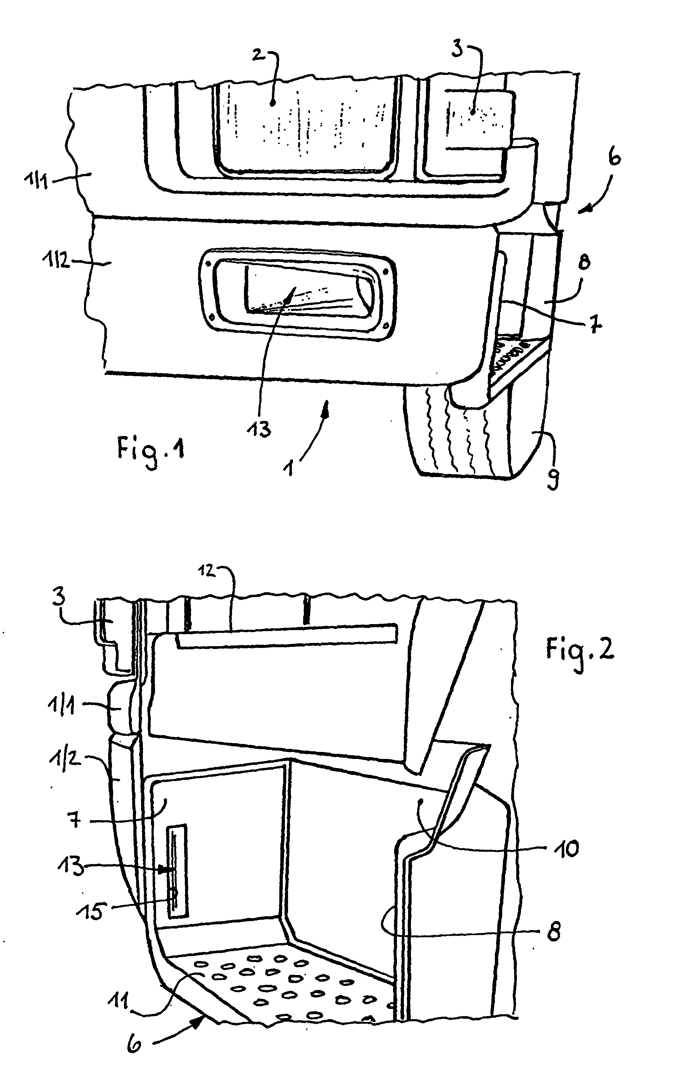

Aus der Zeichnung ist ersichtlich, daß am Frontlenker-Lastkraftwagen zwei solcher Düsenkanäle 13, je Fahrzeugseite einer, vorgesehen sind. Dabei geht jeder Düsenkanal 13 nahe des Eckbereiches von der Stoßfänger-Vorderwand ab, führt in gekrümmter Form zum benachbarten Einstiegkasten 6 hin und mündet in diesen über eine in dessen Vorderwand 7 gegebene Durchtrittsöffnung 15 aus. Jeder zu einem Einstiegkasten 6 hinführende Düsenkanal 13 kann einkanalig - siehe Fig. 1, 2, 8, und 9 - oder mehrmalig ausgebildet sein. Die Mehrkanaligkeit eines Düsenkanals 13 kann dadurch realisiert sein, daß er aus mehreren einzelnen Teilkanälen zusammengesetzt ist oder intern durch wenigstens eine Trennwand, z.B. eine vertikale Wand 18 und/oder horizontale Wand 19 - siehe Fig. 4, 5 und 6 - in mehrere Teilkanäle unterteilt ist.

Fig. 1 zeigt, daß der Düsenkanal 13 eine Öffnung im Stoßfänger 1 durchdringt und an letzterem mittels eines Flansches befestigt ist. Fig. 2 zeigt eine Austrittsquerschnittsform des Düsenkanals 13, wie durch die Durchtrittsöffnung 15 in der Einstiegkasten-Vorderwand 7 begrenzt. Die Fig. 3 und 4 zeigen, daß das hintere Ende des Düsenkanals 13 über eine stoßfängerinterne Halterung 16 lagefixiert ist und der Übergangsbereich z.B. durch ein flexibles Zwischenglied 17 realisiert ist. Letzteres ist aber nur dort notwendig, wo der Einstiegkasten 6, in den der Düsenkanal 13 ausmündet, fest am Fahrerhaus angeordnet ist und bei dessen Kippen mit diesem mitbewegt wird sowie in Normallage des Fahrerhauses dessen begrenzte Einfederbewegungen ausgeglichen werden müssen.

Außerdem kann jeder Düsenkanal 13 eingangs ein Schmutzfanggitter 20 aufweisen, das während der Fahrt das Eindringen von Schmutz und sonstigen Partikeln von vorne in den Düsenkanal 13 be- oder verhindert. Die Fang- bzw. Abweisrate hängt dabei von der Gestaltung des Schmutzfanggitters 20 ab. Ein solches Schmutzfanggitter 20 deckt den Eingangsbereich des Düsenkanals 13 gemäß Fig. 7 und 10 ab, wobei dies unabhängig von der inneren ein- oder mehrkanaligen Ausbildung des Düsenkanals 13 ist.

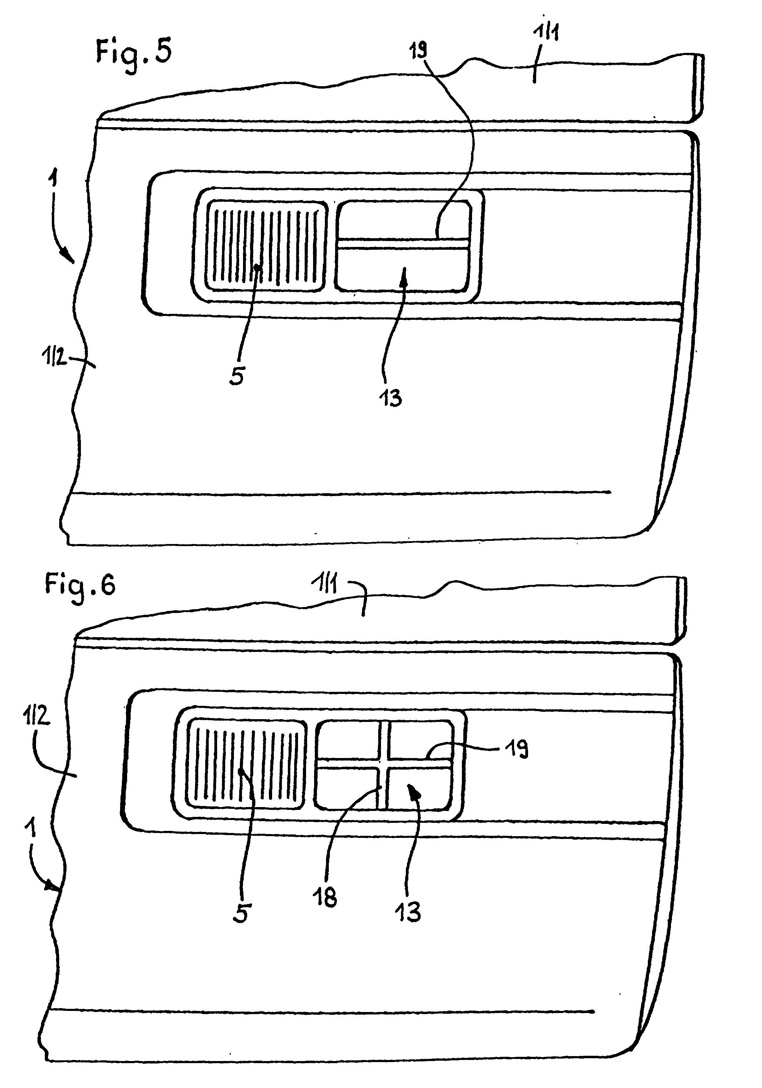

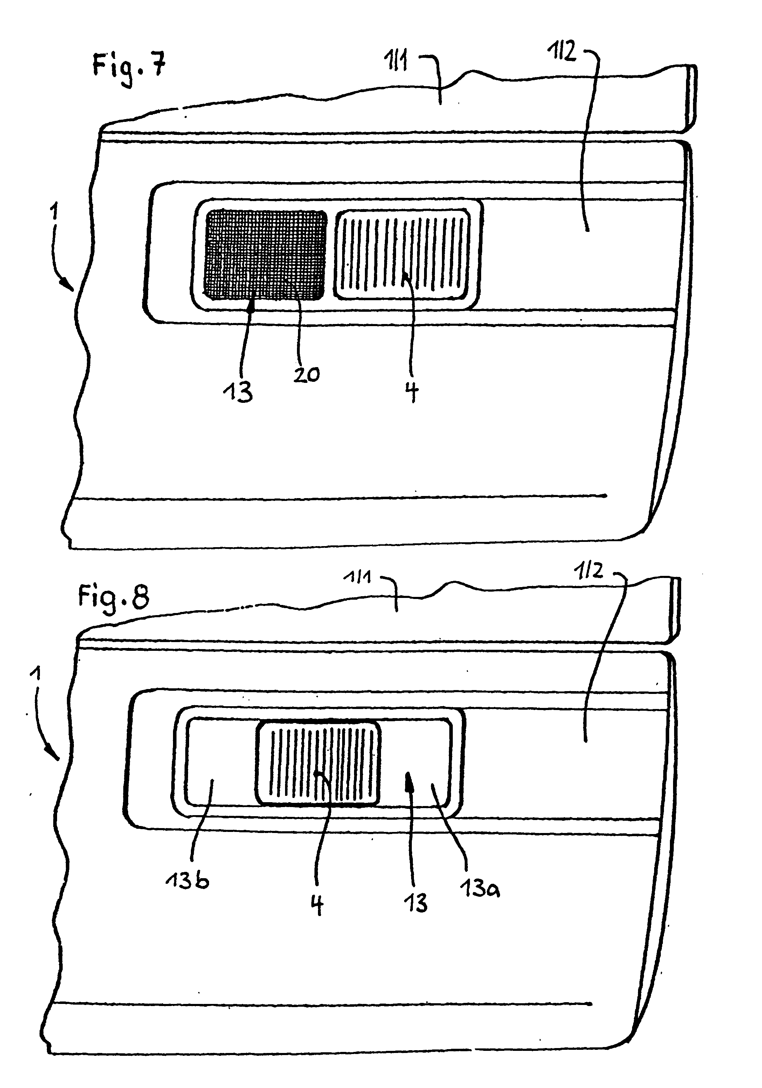

Wie die Fig. 5, 6, 7, 8 zeigen, kann ein Düsenkanal 13 eingangs von einer stoßfängervorderseitigen, an sich für den Einbau eines Zusatzscheinwerfers vorgesehenen Öffnung abgehen. Außerdem kann der Eingangsbereich eines Düsenkanals 13 - siehe Fig. 8 und 10 - so gestaltet sein, daß ein Zusatzscheinwerfer 4 bzw. 5 einbaubar ist. Im Fall gemäß Fig. 8 wird dabei der Eintrittsbereich des Düsenkanals 13 in zwei links und rechts des Zusatzscheinwerfers gegebene Teilquerschnittsflächen 13a, 13b unterteilt, da der eingebaute Zusatzscheinwerfer oben und unten bündig an der Begrenzungswand 14 des Düsenkanals 13 anschließt.

Im Fall gemäß Fig. 10 ist der Zusatzscheinwerfer etwa mittig im Eintrittsbereich des Düsenkanals 13 eingebaut, so daß sich eingangs des letzteren ein ringförmiger LuftEintrittsquerschnitt ergibt Dabei kann der Zusatzscheinwerfer 4 bzw. 5 von einem ihn ringförmig umgebenden Schmutzfanggitter 20 getragen und über dieses in den Eingangsbereich des Düsenkanals 13 eingebaut gehalten sein.

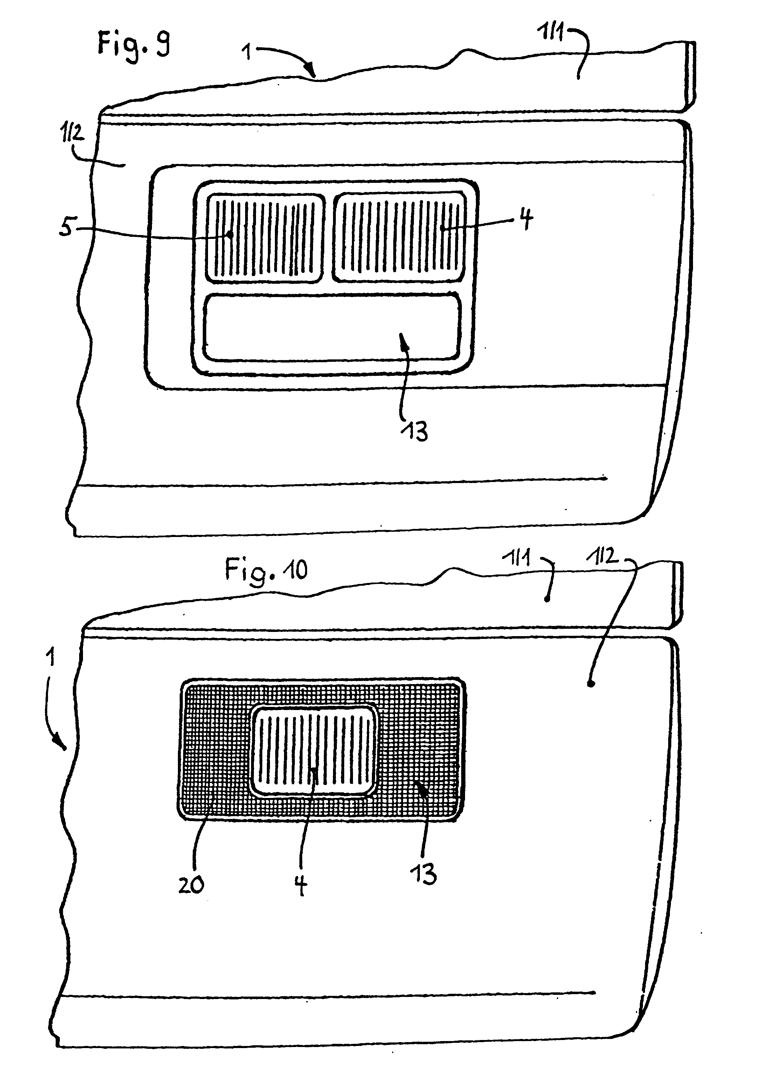

Im Beispiel gemäß Fig. 9 ist der Düsenkanal 13 von einer benachbart unterhalb der beiden Zusatzscheinwerfer 4, 5 angeordneten Durchtrittsöffnung des Stoßfängers 1 abgehend angeordnet.

Sofern für die Zusatzscheinwerfer 4, 5 eigene Einfaßrahmen vorgesehen sind, besteht die Möglichkeit, den Düsenkanal 13 an der Durchtrittsöffnung für eine oder beide Zusatzscheinwerfer 4, 5 anzuschließen oder den Düsenkanal einstückig mit einem solchen Einfaßrahmen auszubilden und über diesen am Stoßfänger zu befestigen.

## Patentansprüche

1. Frontlenker-Lastkraftwagen mit einem Fahrerhaus und einem über Eck gehenden, sich bis zum jeweiligen Einstiegkasten (6) hin erstreckenden Stoßfänger (1), wobei ein Düsenkanal (13) sich von einer stoßfängervorderseitgen Eintrittsquerschnittsfläche zu einer Austrittsquerschnittfläche erstreckt,
dadurch gekennzeichet, daß
der Düsenkanal (13) die Vorderseite des Stoßfängers mit der Vorderwand eines Einstiegkastens verbindet, und sich von der Eintrittsquerschnittsfläche ausgehend auf die dieser gegenüber wesentlich kleinere einstiegsseitige Ausstrittsquerschnittsfläche verjüngt und einen Vorlauf seiner äußeren Kanalbegrenzungswand (14) aufweist, daß während der Fahrt durchströmende Luft beschleunigbar und eine gezielt gerichtete, nach Verlassen des Düsenkanals (13) im Einstiegkasten (6) das Eindringen von Schmutz verhindernde Luftströmung erzeugbar ist.

2. Frontlenker-Lastkräftwagen nach Anspruch 1, **dadurch gekennzeichnet, daß** zwei solcher Düsenkanäle (13) - je Fahrzeugseite einer - vorgesehen sind und jeder dieser beiden Düsenkanäle (13) nahe des Eckbereiches von der Stoßfänger-Vorderwand abgeht, in gekrümmter Form zum benachbarten Einstiegkasten (6) hinführt und in diesen über eine Durchtrittsöffnung (15) in dessen Vorderwand (7) ausmündet.

3. Frontlenker-Lastkraftwagen nach einem der Ansprüche 1 und 2, **dadurch gekennzeichnet, daß** ein Düsenkanal (13) einkanalig ausgebildet ist.

4. Frontlenker-Lastkraftwagen nach einem der Ansprüche 1 und 2, **dadurch gekennzeichnet, daß** ein Düsenkanal (13) mehrkanalig ausgebildet ist.

5. Frontlenker-Lastkraftwagen nach Anspruch 4, **dadurch gekennzeichnet, daß** die Mehrkanaligkeit eines Düsenkanals (13) dadurch realisiert ist, daß dieser aus mehreren einzelnen Teilkanälen zusammengesetzt ist

6. Frontlenker-Lastkraftwagen nach Anspruch 4, **dadurch gekennzeichnet, daß** die Mehrkanaligkeit eines Düsenkanals (13) dadurch realisiert ist, daß dieser intern durch wenigstens eine Trennwand, vorzugsweise eine vertikale Wand (18) und/oder horizontale Wand (19) in mehrere Teilkanäle unterteilt ist.

7. Frontlenker-Lastkraftwagen nach einem der vorhergehenden Ansprüche, **dadurch gekennzeichnet, daß** ein Düsenkanal (13) lufteintrittsseitig ein Schmutzfanggitter (20) aufweist.

8. Frontlenker-Lastkraftwagen nach einem der vorhergehenden Ansprüche, **dadurch gekennzeichnet, daß** der Düsenkanal (13) vorne von einer stoßfängervorderseitigen, für den Einbau eines Zusatzscheinwerfers (4, 5) vorgesehenen Öffnung abgeht.

9. Frontlenker-Lastkraftwagen nach einem der vorhergehenden Ansprüche, **dadurch gekennzeichnet, daß** in den lufteintrittsseitigen Eingangsbereich eines Düsenkanals (13) ein Zusatzscheinwerfer (4 bzw. 5) eingebaut ist.

10. Frontlenker-Lastkraftwagen nach einem der Ansprüche 8 und 9, **dadurch gekennzeichnet, daß** der Zusatzscheinwerfer (4 bzw. 5) von einem ringförmigen Schmutzfanggitter (20) umgeben und über dieses im lufteintrittsseitigen Eingangsbereich des Düsenkanals (13) eingebaut gehalten ist

## Claims

1. Forward-control truck with a cab and a bumper (1) extending round the comer and up to the respective entrance element (6), a nozzle duct (13) extending from an inlet cross-section face on the front side of the bumper to an outlet cross-section face, **characterised in that** the nozzle duct (13) connects the front side of the bumper with the front wall of an entrance element, becomes narrower as it extends from the inlet cross-section face to the outlet cross-section face, which outlet cross-section face is on the entrance side and is significantly smaller than said inlet cross-section face, and is provided with a lead section on its exterior duct limiting wall (14), that air passing through it while the vehicle is in motion can be accelerated and a purposefully guided air stream can be generated which after leaving the nozzle duct (13) in the entrance element (6) prevents the penetration of dirt.

2. Forward-control truck according to Claim 1, **characterised in that** two such nozzle ducts (13) - one on each side of the vehicle - are provided and each of the two nozzle ducts (13) starts near the comer area of the bumper front wall, extends to the adjacent entrance element (6) in a curved path and terminates with its outlet end in the front wall (7) of said entrance element (6) via a passage orifice (15).

3. Forward-control truck according to the Claims 1 and 2, **characterised in that** a nozzle duct (13) is designed as a single duct.

4. Forward-control truck according to the Claims 1 and 2, **characterised in that** a nozzle duct (13) is designed as a multiple duct.

5. Forward-control truck according to Claim 4, **characterised in that** the multiplicity of the ducts in a nozzle duct (13) is achieved by the nozzle duct's being composed of several individual part-ducts.

6. Forward-control truck according to Claim 4, **characterised in that** the multiplicity of the ducts in a nozzle duct (13) is a achieved by the nozzle duct's being internally divided into several part-ducts by at least one partition wall, preferably a vertical wall (18) and/or a horizontal wall (19).

7. Forward-control truck according to one of the foregoing Claims, **characterised in that** a nozzle duct (13) is provided with a dirt-retaining grille (20) at the air entry end.

8. Forward-control truck according to one of the foregoing Claims, **characterised in that** the front end of the nozzle duct (13) starts at an orifice which is located in the front wall of the bumper and is provided for the installation of an auxiliary headlight (4, 5).

9. Forward-control truck according to one of the foregoing Claims, **characterised in that** an auxiliary headlight (4 and 5) is installed in the area of the air inlet to the nozzle duct (13).

10. Forward-control truck according to one of the Claims 8 and 9, **characterised in that** the auxiliary headlight (4 and 5) is surrounded by a ring-type dirt-retaining grille (20) and is, in its installation position, retained in the area of the air inlet to the nozzle duct (13) by said grille.

## Revendications

1. Camions à cabine avancée avec une cabine et un pare-chocs (1) se prolongeant au delà de l'angle avant jusqu'à chaque passage d'emmarchement (6), auquel cas un tunnel d'aération (13) s'étend d'une surface transversale d'admission sur la face avant du pare-chocs à une surface transversale de sortie, **caractérisée en ce que** le tunnel d'aération (13) relie la face avant du pare-chocs à la paroi avant d'un passage d'emmarchement, et se rétrécit de la surface transversale d'admission à la surface transversale de sortie considérablement plus petite par rapport à celle d'admission et placée du côté de l'emmarchement, et présente une section montante de sa paroi extérieure de réduction de tunnel (14), et **en ce que**, pendant la marche du véhicule, l'écoulement de l'air puisse être accéléré et qu'un écoulement de l'air dirigé précisément et empêchant la pénétration de salissures dans le passage d'emmarchement (6) après avoir quitté le tunnel d'aération (13) puisse être produit.

2. Camions à cabine avancée selon la revendication 1, **caractérisée en ce que** deux tels tunnels d'aération (13) sont prévus de chaque côté du véhicule - un de chaque côté - et que chacun de ces deux tunnels d'aération (13) part de la paroi avant du pare-chocs à proximité de l'angle de celui-ci, conduit au passage d'emmarchement (6) voisin de manière courbe et débouche dans celui-ci par le biais d'une ouverture (15) dans sa paroi avant (7).

3. Camions à cabine avancée selon les revendications 1 et 2, **caractérisée en ce qu'**un tunnel d'aération (13) est formé d'un tunnel unique.

4. Camions à cabine avancée selon l'une des revendications 1 et 2, **caractérisée en ce qu'**un tunnel d'aération (13) est formé de plusieurs tunnels.

5. Camions à cabine avancée selon la revendication 4, **caractérisée en ce que** la multiplicité de tunnels d'un tunnel d'aération (13) est réalisée par le fait que le tunnel est constitué de plusieurs tunnels individuels.

6. Camions à cabine avancée selon la revendication 4, **caractérisée en ce que** la multiplicité de tunnels d'un tunnel d'aération (13) est réalisée en divisant celui-ci de manière interne en plusieurs tunnels par au moins une paroi de séparation, de préférence par une paroi verticale (18) et/ou une paroi horizontale (19).

7. Camions à cabine avancée selon l'une des revendications énoncées précédemment, **caractérisée en ce qu'**un tunnel d'aération (13) présente du côté de l'admission d'air une grille d'arrêt des salissures (20).

8. Camions à cabine avancée selon l'une des revendications l'énoncées précédemment, **caractérisée en ce que** le tunnel d'aération (13) part à l'avant d'une ouverture prévue pour la pose d'un projecteur additionnel (4, 5) sur la face avant du pare-chocs.

9. Camions à cabine avancée selon l'une des revendications énoncées précédemment, **caractérisée en ce qu'**un projecteur additionnel (4 et 5) est monté dans la zone d'entrée d'un tunnel d'aération (13) du côté de l'admission d'air.

10. Camions à cabine avancée selon l'une des revendications 8 et 9, **caractérisée en ce que** le projecteur additionnel (4 et 5) est entouré d'une grille d'arrêt des salissures de forme annulaire (20) et est maintenu monté par le biais de cette zone d'entrée du tunnel d'aération (13) du côté de l'admission d'air.
